# EUROPEAN PATENT APPLICATION

(11) **EP 2 378 771 A2**
(43) Date of publication of application: **19.10.2011**
(21) Application number: 09837668.4
(22) Date of filing: 21.12.2009
(51) Int. Cl.: H04N 7/173, H04N 5/445

(54) **SYSTEM, METHOD, AND COMPUTER READABLE RECORDING MEDIUM FOR PROVIDING TWO-WAY SERVICE IN DIGITAL CABLE BROADCASTING ENVIRONMENT**

(30) Priority: 12.01.2009 KR 20090002428
(71) Applicant: ITVMG, Seocho-gu Seoul 137-909 (KR)
(72) Inventor: SEO,Sung Ho, Seoul 137-767 (KR)
(74) Representative: Diehl & Partner GbR
(86) International application number: PCT/KR2009/007650
(87) International publication number: WO 2010/079907

(57) **Abstract**

The present invention relates to system, method, and computer readable recording medium for providing two-way service in a digital cable broadcasting environment. One embodiment of the invention provides a system for providing a two-way service in a digital cable broadcasting environment, comprising: a ubiquitous server that generates contents to provide two-way service in a digital cable broadcasting system; a ubiquitous network manager that monitors the usage volume in a cable network and manages the transmission of the contents generated by the ubiquitous server; and a QAM system that sends the contents generated by the ubiquitous server as digital cable broadcasting signals, so that the contents can be received at a receiver terminal where a flexible browser is driven.

## Description

### [Technical Field]

The present invention relates to a method, system, and computer-readable recording medium for providing an interactive service of a digital cable broadcast environment, and more particularly to a method, system, and computer-readable recording medium for generating interactive content in a cable broadcast environment and implementing and providing a service based on such content.

### [Background Art]

With the advent of the era of integrated broadcasting and communication, multimedia related environments have changed along with development of technologies, change of viewers' demand, diversification of content supply, and the like.

For example, broadcasting schemes have gradually changed from analog broadcasting to digital broadcasting and broadcast services, which was mainly based on televisions, have been diversified to cable broadcasts, satellite broadcasts, so-called IP TV services which provide multimedia data through a high speed communication network, DMB services, and the like.

Under such digital broadcasting environments, it is possible to transmit not only conventional A/V broadcast signals but also various digital broadcast applications and additional data while implementing and providing an interactive (bidirectional) service through cooperation with a network. Such interactive services take a very important role in settling digital broadcasting and extending digital broadcast services since viewers (i.e., users) can easily use interactive services using a familiar receiving terminal such as a TV and a set-top box (STB).

Generally, in digital broadcasting, A/V data and broadcast service signals decoded in a Head End (H/E) system are transmitted by dividing them into packets having a fixed size within a specified bandwidth and the receiving side recombines the packets and processes them into a digital broadcast service. Here, processing of multiple channels and many programs, execution of applications, and the like are performed simultaneously.

In this case, especially, when a service that is not stored in a receiving terminal is provided, there is a need to perform processes for downloading every data of the service through a network and executing the downloaded data. In this case, transmission and execution speed may be reduced. Packets may also be lost during transmission such that it is not possible to execute related applications. There is also a problem in that it is not possible to provide various high resolution services due to low performance of the receiving terminal.

### [Disclosure]

### [Technical Problem]

An object of the present invention is to solve all the above problems of the related art.

Another object of the present invention is to provide an interactive content service in a ubiquitous environment which can overcome problems that may occur since content for providing services has been developed such that content is processed and provided to allow receiving terminals to easily receive, the problems including a long content development period, difficulties in achieving compatibility of content due to different technical standards of media, limited content capacity due to low performance of receiving terminals, low content execution (or reproduction) speed, difficult service content matching in receiving terminals, the occurrence of side effects in a receiving terminal when service content is changed, and the occurrence of re-matching issues.

Particularly, it is an object of the present invention to provide a system and method for providing an interactive content service in a cable broadcast environment based on an interactive broadcast system which can overcome network bandwidth problems such as 1 to many communication through in-band transmission of a cable broadcast.

### [Technical Solution]

The following are characteristic configurations of the present invention for achieving the above objects of the present invention and realizing the characteristic advantages of the present invention described below.

In accordance with an embodiment of the present invention, there is provided a system for providing an interactive service in a digital cable broadcast environment, the system including a ubiquitous server that generates content for providing an interactive service in a digital cable broadcast system, a ubiquitous network manager that monitors usage of a cable network and manages transmission of content generated by the ubiquitous server, and a QAM system that transmits content generated by the ubiquitous server through a digital cable broadcast signal such that the content can be received by a receiving terminal in which a flexible browser is running.

In accordance with another embodiment of the present invention, there is provided a method for providing an interactive service in a digital cable broadcast environment, the method including a) a ubiquitous server generating content for providing an interactive service in a digital cable broadcast system, b) a ubiquitous network manager monitoring usage of a cable network and managing transmission of content generated by the ubiquitous server, and c) a QAM system transmitting content generated by the ubiquitous server through a digital cable broadcast signal such that the content can be received by a receiving terminal in which a flexible browser is running.

In accordance with the present invention, there are also provided other methods and systems for implementing the present invention and a computer readable recording medium containing a computer program for executing the above method.

### [Advantageous Effects]

According to the present invention, the platform service provider can gain the following advantages in digital cable broadcasting regardless of technical standards agreed with platforms of other broadcast companies. First, it is possible to achieve easy content compatibility and it is also possible to achieve easy compatibility of an enormous amount of web content (for example, it is possible to find content using only a website address and to convert the content in a server). Accordingly, it is possible to achieve united management of content information and easy service provision. In the case where multiple DP services are provided, there is a need to perform service-based management and system-based management. However, when multiple DP services are provided, it is possible to significantly reduce management and maintenance costs since united management is possible.

In addition, according to the present invention, a broadcast communication service provider can immediately apply content regardless of characteristics of the platform or receiving terminal and the method of receiving content from a CP and DP becomes easy and therefore it is possible to easily configure service-related policies and plans and also to easily change the same.

Further, according to the present invention, due to easy development and matching, a content provider such as a CP and a DP can reduce excessive resources due to site matching and development efforts of several months that need to be done when general service development is performed. Accordingly, it is possible to achieve a reduction in development costs, finally securing price competitiveness.

Furthermore, according to the present invention, the user can use content transmitted from a ubiquitous server using only a flexible browser that executes a ubiquitous service in a receiving terminal or a module corresponding to the flexible browser. In the related art, there are limitations to content that is stored and serviced in a receiving terminal due to limitations to hardware such as memory (for example, RAM). However, according to the present invention, it is possible to easily extend content regardless of the specifications of the receiving terminal since the present invention solves the radical problem of having to store and execute a service in a receiving terminal. Accordingly, it is possible to reduce costs required to implement a high-performance receiving terminal and it is possible for the platform service provider to secure price competitiveness in terms of service costs.

Moreover, according to the present invention, it is possible to solve the matching problem that occurs due to presence of a variety of manufacturers. In the related art, when the number of content items or receiving terminals is N, the number of content-based or receiving-terminal-based matching processes is N*N. On the other hand, according to the present invention, it is possible to reduce the matching period and it is also possible to prevent problems such as side effects that occur when service content is changed since content can be serviced only through flexible browser matching without service content matching. In addition, In the related art, a situation such as temporary service stop for service change is inevitable while a commercial service is being provided. However, according to the present invention, it is possible to always provide a stable service since services can be changed only through content change transmission.

Further, according to, it is possible to efficiently redistribute idle resources on a network since it is possible to monitor a cable network. Under digital cable environments, network equipment allocation is performed for each physical region or a logical service group. Accordingly, network equipment and broadcast system installation need to be extended due to service extension (for example, extension to a triple play service) and service use increase. However, using a ubiquitous system according to the present invention enables real-time network resource redistribution and broadcast system management, thereby making it possible to easily achieve planned system and equipment installation extension and to easily maintain and repair such equipment. Furthermore, continuous service viewing is possible on a receiving terminal since, using characteristics of a cable broadcast network, specifically, characteristics of an HFC network, it is possible to efficiently utilize idle resources and to retransmit content through the same frequency band.

In addition, according to the present invention, it is possible to provide an application service of various PC-based multimedia data since a multiple-multimedia module such as a plug-in module is included in the flexible browser of the receiving terminal. Further, it is possible to perform processing associated with email, flash, various OA applications of the PC, game applications, and the like. Moreover, in the era of integrated broadcasting and communication where a broadcast service is provided in a communication field, it is possible to provide a reversed service which provides communication-related functions in a broadcast field.

Furthermore, according to the present invention, a simplified ubiquitous server module is provided to make it possible to provide a personal broadcast through digital cable broadcasting. This allows users to become active prosumers who can create and provide information rather than mere consumers.

### [Description of Drawings]

FIG. 1 is a block diagram illustrating a configuration of an entire system for providing an interactive service in a digital cable broadcasting environment according to an embodiment of the present invention.

FIG. 2 is a detailed block diagram illustrating a detailed configuration of the entire system of FIG. 1.

FIG. 3 is a block diagram illustrating a configuration of a system for providing an interactive service in a digital cable broadcast environment according to another embodiment of the present invention.

FIG. 4 is a flow chart illustrating an exemplary procedure for providing an interactive service according to an embodiment of the present invention.

FIG. 5 is a screenshot illustrating an example in which a service is provided according to the procedure of FIG. 4.

FIG. 6 is a screenshot illustrating another example in which a service is provided according to the procedure of FIG. 4.

FIG. 7 is a flow chart illustrating another exemplary procedure for providing an interactive service according to an embodiment of the present invention.

FIG. 8 is a flow chart illustrating a procedure for generating content of an interactive service according to an embodiment of the present invention.

FIG. 9 is a screenshot illustrating an exemplary T-commerce service provided according to an embodiment of the present invention.

FIGS. 10 to 17 illustrate screenshots illustrating exemplary open content browsing according to an embodiment of the present invention.

### [Best Mode]

The following detailed description of the present invention will be given with reference to the accompanying drawings which show specific possible embodiments of the present invention as examples. The embodiments will be described in sufficiently detail enough to enable those skilled in the art to practice the present invention. It should be understood that various embodiments of the present invention are not necessarily exclusive to each other although the various embodiments are different. For example, specific forms, structures, and features of one embodiment described herein may be implemented as another embodiment without departing from the scope and spirit of the present invention. It should also be understood that the positions or arrangements of individual components of each embodiment described below can be changed without departing from the scope and spirit of the present invention. Accordingly, the following detailed description is not intended to limit the scope of the present invention and the scope of the present invention is limited only by the appended claims and all equivalents thereof. Like reference numerals in the drawings refer to the same or like functions in various aspects.

Hereinafter, preferred embodiments of the present invention will be described in detail with reference to the accompanying drawings so that those skilled in the art can easily practice the present invention. Embodiments of the present invention will now be described in detail with reference to the accompanying drawings.

A broadcast communication system and a receiving terminal described as an example in the embodiments of the present invention are applied to any device associated with a broadcast communication system such as a TV, a personal computer, a PCTV, a set-top box, a PVR, or a DVR without being limited to a specific system and hardware device.

In addition, the present invention is applied to a digital TV service, a VOD service, an AOD service, an Internet service, a digital home service, or any other digital content service that is provided to terminals using a digital storage medium (for example, a PVR or DVR) without being limited to a specific medium.

With the advent of the era of integrated broadcasting and communication, multimedia related environments have changed along with development of technologies, change of viewers' demand, diversification of content supply, and the like. For example, broadcasting schemes have gradually changed from conventional analog broadcasting to digital broadcasting and broadcast services, which was mainly based on televisions, have been diversified to cable broadcasts, satellite broadcasts, so-called IP TV services which provide multimedia data through a high speed communication network, DMB services, and the like.

Among various types of broadcasts, cable broadcasting has successfully transitioned from analog broadcasting to digital broadcasting based on development of cable network infrastructure and broadcast technologies, compared to satellite or DMB broadcasting which is less influential due to limited network technologies and media.

Cable broadcasting has extended its share in the broadcast market by introducing a new paid service model to on-demand service such as VOD or by introducing a local service, a triple play service, or the like. However, cable broadcasting cannot avoid competition with web content platform service providers and IPTV communication service providers which present themselves as a total media platform service provider in the era of integrated broadcasting and communication.

Large communication service providers and web content platform service provider are increasing their share in broadcast communication services while providing terrestrial content, Internet-based content, and various service products combined with other media. Thus, digital cable broadcasting has reached the time to discover new business models and to solve the problem of poor content demand and supply in the era of integrated broadcasting and communication which remove boundaries between broadcasting and communication.

As initial cable broadcasting, digital cable TV broadcasting through an HFC network has achieved high-quality broadcast services in terms of image quality and audio quality, compared to analog TV broadcasting, thereby gaining a significant quality advantage over other media. The cable HFC network has been most widely installed and commercialized among broadcast communication media due to its extensive facility investment and rapid service establishment and has also been widely used as the most efficient solution not only in Korea but also in United States and China based on its broadband and economic efficiency.

The cable HFC network is shared by a number of users due to its network characteristics. However, if many users simultaneously use the cable HFC network, its transfer rate may be significantly reduced due to excessive network resource competition. To overcome this problem, the related art has suggested a method of providing interactive content and a method of providing a 1 to many communication service through in-band transmission in a digital cable environment. However, to achieve a true one-to-one matching service as when web content is used, there is a need to develop a system and method for efficiently using network resource competition.

Digital cable network technologies for solving such conventional network resource competition include cell division and bandwidth extension. These methods have achieved network division to some extent. However, there is a need to consider additional network utilization due to introduction of new business logics and applications.

The HFC network is a broadband communication network including optical fiber and coaxial cables. The HFC network uses optical fiber cables between broadcast stations and Optical Network Units (ONUs) and coaxial cables between ONUs and subscribers so that it is possible to transmit a lot of data associated with Internet, cable TV, crime prevention, disaster prevention, remote meter reading, automatic control, and the like. Theoretically, the HFC network can support a broad transmission bandwidth that enables connections at transfer rates of 9600bps to 30Mbps per channel of the 6MHz bandwidth.

The optical fiber section of the HFC network between a broadcast station and an ONU, which is located midway between the broadcast station and subscribers, is configured in a star form and the coaxial cable section between the ONU and subscribers is configured in a Tree & Branch form. Here, the optical cable section is configured by separately constructing uplink and downlink optical transmission lines using optical transmission and reception devices and optical cables, and the coaxial cable section is configured such that uplink and downlink transmission lines for the same coaxial cable are formed using a coaxial amplifier such as a TBA, passive elements such as a splitter and tap-off, and a coaxial cable by dividing a frequency band for the coaxial cable.

When digital or analog data is transmitted in the HFC system, data is transmitted through an optical cable between a distribution center and an outdoor optical transmitter/receiver (ONU). Here, the outdoor optical transmitter/receiver is equipment that converts an optical signal back to an electrical signal and transmits the electrical signal to each subscriber using a coaxial cable. The outdoor optical transmitter/receiver is rapidly replacing a dedicated coaxial network since it has an advantage in that there is no quality difference between cells close to the broadcast station and cells distant therefrom, compared to the conventional dedicated coaxial network. Optically transmitted broadcast and data signals have the same quality at every cell such that the qualities of signals received from the broadcast station are nearly uniform.

The frequency bandwidth used in the conventional HFC network is about 450MHz. However, about 80% of the network has been upgraded to a range of 750 to 870MHz and about 70% has been established such that a bandwidth of 750MHz can be used. Generally, a band of 5 to 42MHz has been set as a band for uplink signal transmission and a band of 500 to 552MHz has been set as a guard band. The downlink band having a larger bandwidth than the uplink band can be divided into a band of 54 to 500MHz for analog broadcasting, a band of 500 to 552MHz for Internet service, and a band of 552 to 750MHz for digital broadcasting and additional services. A band of 864MHz to 2GHz capable of providing additional interactive services is under development as an extensible band.

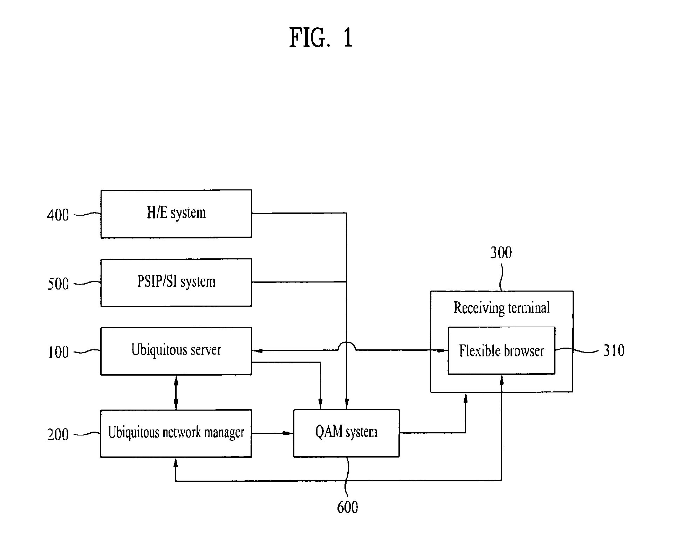

FIG. 1 is a block diagram illustrating a configuration of an entire system for providing an interactive service in a digital cable broadcasting environment according to an embodiment of the present invention.

As shown in FIG. 1, the entire system of the present invention includes a Ubiquitous Server (UBS SVR) 100, a ubiquitous network manager 200, and a receiving terminal 300. The ubiquitous server 100 generates content for providing an interactive service. The ubiquitous network manager 200 performs cable network usage management and efficient content transmission. The receiving terminal 300 includes a flexible browser 310 that receives and drives an interactive service.

The system may further include a broadcast Head/End (H/E) system 400 that provides A/V and broadcast information, a PSIP/SI system 500 that generates and provides program scheduling information and broadcast system information (SI), and a QAM system 600 that transmits a digital cable broadcast signal.

The H/E system 400 generates and compresses and multiplexes A/V and various digital information in a digital cable broadcast system and transmits the resulting signal through a digital cable broadcast bandwidth.

The PSIP/SI system 500 generates and transmits a channel lineup, program scheduling information, and the like such that such information can be processed by the receiving terminal 300. Here, the term "PSIP/SI" refers to system information of a digital cable broadcast system.

The ubiquitous server 100 encodes content for providing an interactive service into a format suiting a digital cable broadcast environment and transmits the encoded content through a cable network such that the content can be driven on the flexible browser 310 of the receiving terminal 300. The ubiquitous server 100 also functions to transmit additional data such as personal information of each receiving terminal 300 in combination with an SMS system and other systems of the cable broadcast system.

The ubiquitous network manager (UBS manager) 200 monitors the state of a QAM system 600 for efficient content transmission according to network use of digital cable broadcasting and allows the ubiquitous server 100 to transmit content using resources of idle QAM equipment. The ubiquitous network manager 200 also performs session management of the receiving terminal 300 for efficient response of the ubiquitous server 100.

The flexible browser 310 requests an interactive service by communicating with the ubiquitous server 100 and the ubiquitous network manager 200 using an application, which has a lifecycle so as to be always executed in the receiving terminal 300, and receives the interactive service through the QAM system 600 and performs the received interactive service.

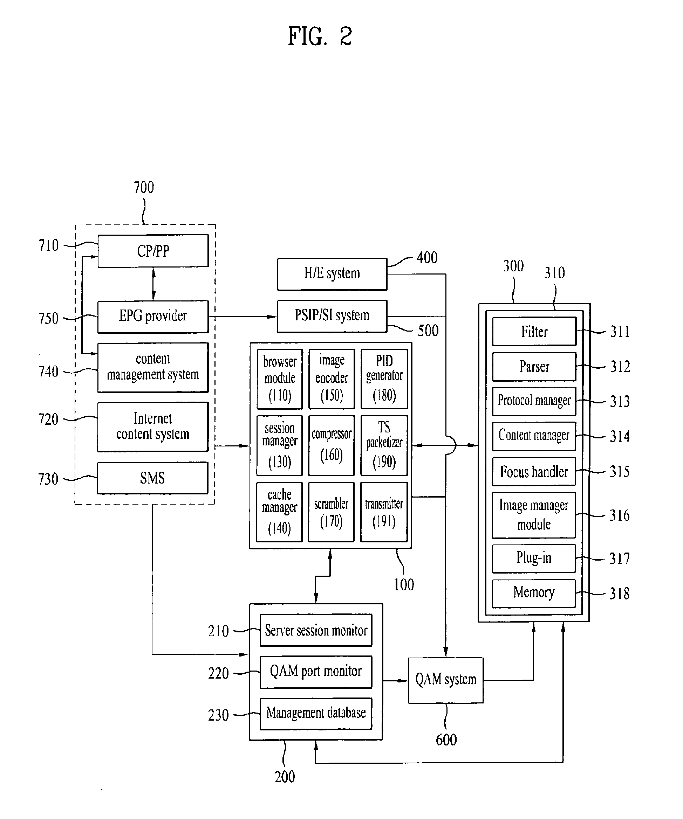

FIG. 2 is a detailed block diagram illustrating a detailed configuration of the entire system of FIG. 1.

As shown in FIG. 2, the system of the present invention may cooperate with an external system 700 such as an Internet content system 720, a CP/PP 710, or an SMS system 730 or other system of another digital cable system. In addition, one exemplary extension of the ubiquitous system is a content management system 740 which can manage a Walled Garden service.

The system may further include an EPG provider 750 that provides a program guide between the CP/PP 710 and the PSIP/SI system 500.

The following is a detailed configuration of the ubiquitous server 100.

When there is a need to automatically generate interactive service content according to a specific schedule or according to a request from the flexible browser 310 of the receiving terminal 300, the browser module 110 of the ubiquitous server 100 browses an interactive service in the ubiquitous server 100 and generates raw data for transmitting the content to the receiving terminal 300.

When the content is of Walled Garden type, the browser module 110 may first process raw data in cooperation with a cache manager 140. Content of an open content type service such as Internet content is generally browsed in real time through an external Internet system to generate raw data.

The browser module 110 compares raw data generated before being provided to the receiving terminal 300 with raw data to be generated according to a re-request from the receiving terminal 300. This reduces the amount of data to be exchanged between the ubiquitous server 100 and the receiving terminal 300 to efficiently improve network usage.

The browser module 110 may include a plug-in for driving various types of content such as moving images, flash content, and various applications and various components such as Active x included in content.

When content transmission is performed between the ubiquitous server 100 and the receiving terminal 300, for example, when interactive service content is automatically generated according to a specific schedule or according to a request from the flexible browser 310 of the receiving terminal 300, a session manager 130 performs processing on a corresponding session for management of resources of the ubiquitous server 100.

In addition, the session manager 130 may perform processing for returning resources of the server in preparation for the case where an unexpected error such as network disorder or an error of the receiving terminal 300 has occurred. In addition, ubiquitous servers 100 may be constructed in parallel to perform a number of broadcast processing and communicates with another server to perform a function to restore the server when the server malfunctions.

The cache manager 140 performs a cache function in order to improve interactive service response performance and server operation. The system of the present invention may register frequently used services in the cache manager 140 such that encoding is not performed on stationary data and may perform an Internet proxy function through the cache manager 140 when the content is open content.

When content is executed by the browser module 110, an image encoder 150 of the ubiquitous server 100 generates an image corresponding to a transmission part (for example, a content screen, component, binary, text, or image part) of the content according to protocols (or specifications) of the ubiquitous system. The protocols of the ubiquitous system include various protocols associated with a focus process of the flexible browser 310 of the receiving terminal 300, text information changing in real time such as ticker, a library, and a common component such as a Walled Garden service which can be commonly used for service unification. The image encoder 150 performs image processing according to these protocols.

The image encoder 150 may generate and transmit various types of content. The browser may drive various types of content such as moving images, flash content, and various applications and various components such as Active X included in content. The image encoder 150 performs a function to convert such various content into images together and to transmit the images to the receiving terminal 300.

A compressor 160 compresses interactive service content which has been converted into an image in order to reduce network usage and transmission time.

Interactive services provided through the ubiquitous system may include paid content. Data that is processed in content may be confidential information such as personal information and billing information. The ubiquitous system may include a scrambler (or encrypter) 170 which encrypts (or scrambles) such confidential information such that it can be processed only by the flexible browser 310 of the receiving terminal 300. Here, data to be encrypted may be entire content or may be part of the content such as text data.

The following is a more detailed description of an authority related process. An interactive service provided through the ubiquitous system may include paid content. For example, individual content items such as Baduk, Tetris, and Matgo may be grouped into a game to configure a paid service and each individual interactive content item may also be configured as a paid service. An authority to use open content may be allocated to provide the corresponding service as a paid service. The authority for the service may be processed in cooperation with a Conditional Access System (CAS) which is a subscriber management system of a general digital cable broadcast system.

The following is a description of a PID generator (or PSI generator) 180. Information of interactive content transmitted from the ubiquitous server 100 to the receiving terminal 300 is generated as MPEG2-TSs similar to general A/V content. Data of interactive content is transmitted with reference to a PID, which is allocated to the interactive content by the ubiquitous network manager 200, and the receiving terminal 300 performs the interactive content by filtering the PID. The PID generator 180 may generate and provide corresponding information in cooperation with a system information generator, which is a system for generating various broadcast information such as PSIP/SI, in a general data broadcast system.

A TS packetizer (or TS converter) 190 performs TS packetization in order to transmit data generated through the browser module 110, the image encoder 150, the compressor 160, and the scrambler 170 through digital broadcasting.

A transmitter (UDP transmitter) 191 transmits a packet stream generated by the TS packetizer 190 to a UDP port of the QAM system 600 so as to broadcast the packet stream. Here, the ubiquitous network manager 200 determines a UDP port of the QAM system 600 through which the packet stream can be transmitted by monitoring a digital cable network state (for example, usage of QAM system equipment) and notifies the ubiquitous server 100 of information regarding the UDP port as information of the port through which the ubiquitous server 100 accesses (or connects to) the QAM system 600. The flexible browser 310 of the receiving terminal 300 also receives interactive content information by performing tuning with a bandwidth of the QAM system 600.

A detailed configuration of the ubiquitous network manager 200 will now be described. The ubiquitous network manager 200 is generally provided in a dual manner to cope with emergency situations.

When interactive communication is performed between a specific receiving terminal 300 and the ubiquitous server 100 according to an interactive service request from the flexible browser 310, a server session monitor (SVR session monitor) 210 detects that a session has occurred in the server to process corresponding information. In addition, ubiquitous servers 100 may be connected in parallel and resource distribution for each server is performed and corresponding information is updated such that, when the server has malfunctioned, a session of the flexible browser 310 can be processed by another server.

It is possible to use a bandwidth of the digital cable network when an interactive service and a one-way service are provided using the ubiquitous system.

A QAM port monitor 220 performs a function to manage a port and bandwidth of the equipment of the QAM system 600 used when transmitting information. When there is a need to return network resources upon request from the flexible browser 310, network disorder, and exceeding of standby time, the QAM port monitor 220 updates information of a management database 230 to enable transmission of new content.

The management database 230 of the ubiquitous network manager 200 manages session information of each server, network usage of each device of the QAM system 600, QAM port and state information, PID information, and management information such as a service ID of content that can be used (for example, specified open content with a Walled Garden service).

Content types that can be provided through such a ubiquitous system include an interactive service and a one-way service. Interactive service types can be divided into two types, a Walled Garden service and an open content (Internet) service from the viewpoint of the content provider and can be divided into an independent service and a cooperative service from the viewpoint of the service drive method.

Use of the cooperative service by multiple users may be restricted in terms of distribution of transmission bandwidth resources due to characteristics of the digital cable network.

The one-way service may include a ticker service in which a platform service provider can arbitrarily transmit one-way information, or a service that provides information such as a notice. It is possible to provide a function which enables a one-way service to be associated with an interactive service in terms of service model.

The following is a description of a detailed configuration of the flexible browser 310 that is provided in the receiving terminal 300. The flexible browser 310 may be a type of an unbound application that is stored in the receiving terminal 300 in a digital cable broadcast environment. This application is always executed when the receiving terminal 300 is in operation and serves to perform and manage a one-way and interactive service using the ubiquitous system.

When the flexible browser 310 of the receiving terminal 300 is present in a bandwidth in which service content is transmitted from the ubiquitous server 100, a filter 311 in the receiving terminal 300 performs filtering on a PID of an MPEG2-Ts received through the bandwidth. The PID may be a PID received from the ubiquitous network manager 200.

A parser 312 performs a function to parse service content of the filtered PID and to combine data of each information item. Here, it is possible to combine information items generated by the image encoder 150 of the ubiquitous server 100.

A protocol manager 313 processes images and data generated by the ubiquitous server 100 according to a protocol. The protocols of the ubiquitous system include various protocols associated with a focus process of the flexible browser 310 of the receiving terminal 300, text information changing in real time such as ticker, a library, and a common component such as a Walled Garden service which can be commonly used for service unification. The protocol manager 313 performs a function opposite to the function of the image encoder 150 of the ubiquitous server 100 according to these protocols.

A content manager 314 of the flexible browser 310 manages a lifecycle of a received service. When the lifecycle information of the received service content is in an automatically execution mode, the lifecycle information is automatically displayed on the screen and, when the lifecycle information is in a standby mode, processing is performed to allow the lifecycle information to be in a standby state before an external input is received from the viewer. In addition, a service start and end request is transmitted to the ubiquitous network manager 200. Processing for resources of the receiving terminal 300 is also performed simultaneously.

A focus processing on a service screen needs to be effective due to characteristics of a digital broadcast which allows the viewer to manipulate (or use) a service displayed on the TV screen. Since, to prevent inconvenience when using the service, there is a need to immediately perform processing of an input for focus movement, a focus handler (focus processer) 315, which is a module for focus processing (or focus handling), may be additionally provided to perform focus processing.

Unlike a PC based service that is controlled using a mouse and a remote controller, a general broadcast service can be controlled using only a navigation key, a number key, and a specific function key of a remote controller. Since navigation is performed using up/down/left/right navigation keys, a focus ID, a focus input sequence, and a position (or coordinates) are allocated to content such as open content which can be freely navigated such that only a part for which input focus is possible can be focused. Accordingly, priority is determined upon selection of up/down/left/right navigation keys so that the focus is moved accordingly. The focusing information is encoded according to the protocol when the ubiquitous server 100 performs encoding.

In addition, there is a need to have a function to allow the focus to respond upon each input and to allow information hidden from the screen to be updated in real time. Here, the focus handler 315 stores a large amount of storable information in cooperation with the image manager module 316 to perform reliable navigation.

Especially, when an interactive service is provided among services using the ubiquitous system, request and response operations may be repeatedly performed and operations for generating data from the server and providing the data to the receiving terminal 300 may be performed. Frequent request and response may cause viewer inconvenience associated with reduced response speed. The image manager module 316 of the flexible browser 310 performs a function to manage information received from the server in order to improve such performance degradation.

Common modules such as an image and library modules which are frequently used may be managed by the image manager module 316 and may be directly read from the memory of the receiving terminal 300 to be processed rather than be downloaded.

A history storage function may be provided for a service such as an open content service. This history storage function stores information of previously viewed pages is stored such that, when the viewer calls a previous screen, the server directly retrieves and uses corresponding data from the memory rather than again receives the data from the server.

When an open content service such as an Internet service is provided, various multimedia information can be serviced due to characteristics of the service. In the ubiquitous system of the present invention, various images, text, moving images, and flash, active X, a billing module such as PayGate, and the like may be embedded in a plug-in form in the flexible browser 310 so as to provide corresponding services.

It is possible to apply all services and applications that are executable on a PC, other than such Internet content. A module for executing multimedia information may be provided in the flexible browser 310 and the multimedia information may be encapsulated in the ubiquitous server 100 such that it is converted into an MPEG2-TS to be transmitted to the receiving terminal 300. The corresponding information may be received and stored through the function of the flexible browser 310 and the stored multimedia information is executed by the execution module.

A specific memory region of the receiving terminal 300 may be used as an available region of the flexible browser 310. Images and various usage information may be stored in a memory 318 and may be loaded and used each time needed. Returning of resources is performed at an appropriate time for efficient use of resources.

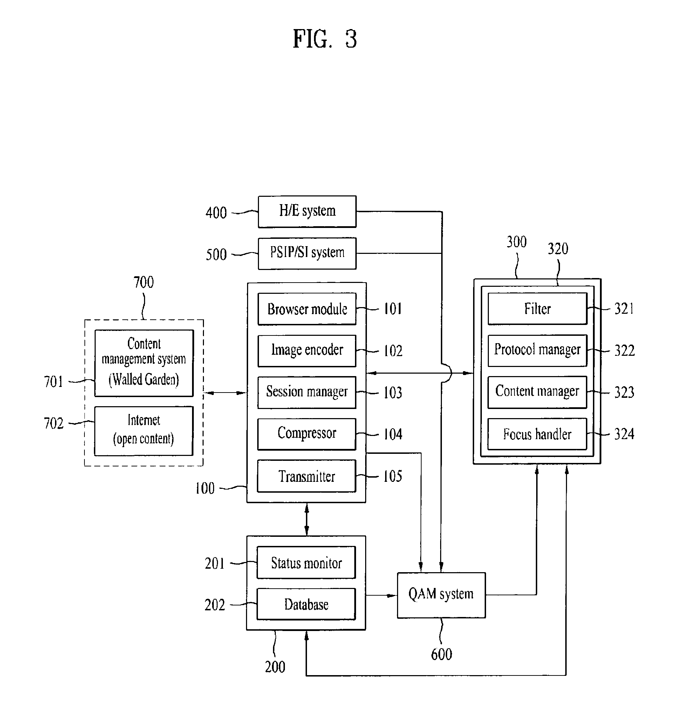

The system may also be simply configured as shown in FIG. 3. FIG. 3 is a block diagram illustrating a configuration of a system for providing an interactive service in a digital cable broadcast environment according to another embodiment of the present invention.

As shown in FIG. 3, the ubiquitous server 100 includes a browser module 101, an image encoder 102, a session manager 103, a compressor 104, and a transmitter 105.

The flexible browser 320 included in the receiving terminal 300 may include a filter 321, a protocol manager 322, a content manager 323, and a focus handler 324.

An external system 700 such as a content management system 701, which can manage a Walled Garden service, or the Internet 702 may be added as an example of the system. The content management system 701 may manage content received from the CP/PP and may also manage paid information, payment information, and the like. It is also possible to configure open content such as the Internet 702 and each content item is requested and executed by the browser module 101 of the ubiquitous server 100. The system may also cooperate with a Subscript Management System (SMS) or another Line Of Business (LOB) system.

When there is a need to automatically generate interactive service content according to a specific schedule or a request from the flexible browser 320 of the receiving terminal 300, the browser module 101 of the ubiquitous server 100 performs browsing on the interactive service in the ubiquitous server 100 and generates raw data for transmitting the content to the receiving terminal 300. The browser module 101 is similar to that of the embodiment shown in FIG. 2.

The session manager 103 performs processing on a session for resource management of the server 100 when content transmission is performed between the ubiquitous server 100 and the receiving terminal 300, for example, when interactive service content is automatically generated according to a specific schedule or a request from the flexible browser 320 of the receiving terminal 300.

In addition, the session manager 130 may perform processing for returning resources of the server in preparation for the case where an unexpected error such as network disorder or an error of the receiving terminal 300 has occurred. In addition, ubiquitous servers 100 may be constructed in parallel to perform a number of broadcast processing and communicates with another server to perform a function to restore the server when the server malfunctions.

The session manager 103 performs a cache function in order to improve interactive service response performance and server operation. Frequently used services may be registered in the cache manager 140 such that encoding is not performed on stationary data and an Internet proxy function may be performed through the cache manager 140 when the content is open content.

When content is executed by the browser module 110, an image encoder 102 of the ubiquitous server 100 generates an image corresponding to a transmission part (for example, a content screen, component, binary, text, or image part) of the content according to protocols of the ubiquitous system. The protocols of the ubiquitous system include various protocols associated with a focus process of the flexible browser 310 of the receiving terminal 300, text information changing in real time such as ticker, a library, and a common component such as a Walled Garden service which can be commonly used for service unification. The image encoder 102 performs image processing according to these protocols.

The image encoder 102 may generate and transmit various types of content. The browser module 101 may drive various types of content such as moving images, flash content, and various applications and various components such as Active X included in content. The image encoder 102 performs a function to convert such various content into images together and to transmit the images to the receiving terminal 300.

Information of interactive content transmitted from the ubiquitous server 100 to the receiving terminal 300 is generated as MPEG2-TSs similar to general A/V content. Data of interactive content is transmitted with reference to a PID, which is allocated to the interactive content by the ubiquitous network manager 200, and the receiving terminal 300 performs the interactive content by filtering the PID. Here, PID processing may be performed together. However, corresponding information may also be generated and provided in cooperation with a system information generator in a general data broadcast system.

A compressor 160 compresses interactive service content which has been converted into an image in order to reduce network usage and transmission time. Interactive services provided through the ubiquitous system may include paid content. Data that is processed in content may be confidential information such as personal information and billing information.

The ubiquitous system may include a scrambler 170 which encrypts such confidential information such that it can be processed only by the flexible browser 310 of the receiving terminal 300. The compressor 104 may also perform this encryption (or scrambling) process together with the flexible browser 310. Here, data to be encrypted may be entire content or may be part of the content such as text data.

The following is a more detailed description of an authority related process. An interactive service provided through the ubiquitous system may include paid content. For example, individual content items such as Baduk, Tetris, and Matgo may be grouped into a game to configure a paid service and each individual interactive content item may also be configured as a paid service. An authority to use open content may be allocated to provide the corresponding service as a paid service. The authority for the service may be processed in cooperation with a Conditional Access System (CAS) which is a subscriber management system of a general digital cable broadcast system.

The transmitter 105 converts data generated by compressing an image and raw data received after being protocolized into TS packets for transmitting as a digital broadcast and transmits the TS packets to the receiving terminal 300.

The transmitter 105 transmits a packet stream generated by the image encoder 102 to a UDP port of the QAM system 600 so as to broadcast the packet stream. Here, the ubiquitous network manager 200 determines a UDP port of the QAM system 600 through which the packet stream can be transmitted by monitoring a digital cable network state (for example, usage of QAM system equipment) and notifies the ubiquitous server 100 of information regarding the UDP port as information of the port through which the ubiquitous server 100 accesses the QAM system 600. The flexible browser 310 of the receiving terminal 300 also receives interactive content information by performing tuning with a bandwidth of the QAM system 600.

The following is a description of a detailed configuration of the flexible browser 320.

When the flexible browser 320 of the receiving terminal 300 is present in a bandwidth in which service content is transmitted from the ubiquitous server 100, a filter 311 in the receiving terminal 300 performs filtering on a PID of an MPEG2-Ts received through the bandwidth. The PID may be a PID received from the ubiquitous network manager 200.

A filter 321 performs a function to filter a stream with reference to a PID and parse service information received from the ubiquitous server 100 to combine data of each information item. Here, it is possible to combine information items generated by the image encoder 102 of the ubiquitous server 100.

A protocol manager 322 processes images and data generated by the ubiquitous server 100 according to a protocol. The protocols of the ubiquitous system include various protocols associated with a focus process of the flexible browser 320 of the receiving terminal 300, text information changing in real time such as ticker, a library, and a common component such as a Walled Garden service which can be commonly used for service unification. The protocol manager 322 performs a function opposite to the function of the image encoder 102 of the ubiquitous server 100 according to these protocols.

When an open content service such as an Internet service is provided, various multimedia information can be serviced due to characteristics of the service. Various images, text, moving images, and flash, active X, a billing module such as PayGate, and the like may be embedded in the form of an extension of the corresponding protocol in the flexible browser 320 so as to provide corresponding services. It is possible to all services and applications that are executable on a PC, other than such Internet content.

A protocol and module for executing multimedia information are provided in the flexible browser 320 and the multimedia information are encapsulated in the ubiquitous server 100 such that it is converted into an MPEG2-TS to be transmitted to the receiving terminal 300. The corresponding information are received and stored through the function of the flexible browser 320 and the stored multimedia information is executed by the execution module.

A content manager 323 of the flexible browser 320 manages a lifecycle of a received service. When the lifecycle information of the received service content is in an automatically execution mode, the lifecycle information is automatically displayed on the screen and, when the lifecycle information is in a standby mode, processing is performed to allow the lifecycle information to be in a standby state before an external input is received from the viewer. In addition, a service start and end request is transmitted to the ubiquitous network manager 200. Processing for resources of the receiving terminal 300 is also performed simultaneously.

Especially, when an interactive service is provided among services using the ubiquitous system, request and response operations are repeatedly performed and operations for generating data from the server and providing the data to the receiving terminal 300 are performed. Frequent request and response causes viewer inconvenience associated with reduced response speed. The content manager 323 of the flexible browser 320 performs a function to selectively manage information received from the server in order to improve such performance degradation. Common modules such as an image and library modules which are frequently used may be managed in the memory of the receiving terminal 300 and may be directly read from the memory of the receiving terminal 300 to be processed rather than be downloaded.

A focus processing on a service screen needs to be effective due to characteristics of a digital broadcast which allows the viewer to manipulate (or use) a service displayed on the TV screen. Since, to prevent inconvenience when using the service, there is a need to immediately perform processing of an input for focus movement, a focus handler 324, which is a module for focus processing, is additionally provided to perform focus processing.

Unlike a PC based service that is controlled using a mouse and a remote controller, a general broadcast service can be controlled using only a navigation key, a number key, and a specific function key of a remote controller. Since navigation is performed using up/down/left/right navigation keys, a focus ID, a focus input sequence, and a position (or coordinates) are allocated to content such as open content which can be freely navigated such that only a part for which input focus is possible can be focused. Accordingly, priority is determined upon selection of up/down/left/right navigation keys so that the focus is moved accordingly.

The focusing information is encoded according to the protocol when the ubiquitous server 100 performs encoding. In addition, there is a need to have a function to allow the focus to respond upon each input and to allow information hidden from the screen to be updated in real time. Here, the focus handler 324 stores a large amount of storable information in cooperation with the image management module to perform reliable navigation.

The following is a detailed description of a configuration of the ubiquitous network manager 200. In the embodiment of FIG. 2, the server session monitor 210 and the QAM port monitor 220 of the ubiquitous network manager 200 may be integrally constructed as a single state monitor 201.

The database 202 of the ubiquitous network manager 200 manages session information of each server, network usage of each device of the QAM system 600, QAM port and state information, PID information, and management information such as a service ID of content that can be used (for example, specified open content with a Walled Garden service). These functions are similar to those of the embodiment described above with reference to FIG. 2.

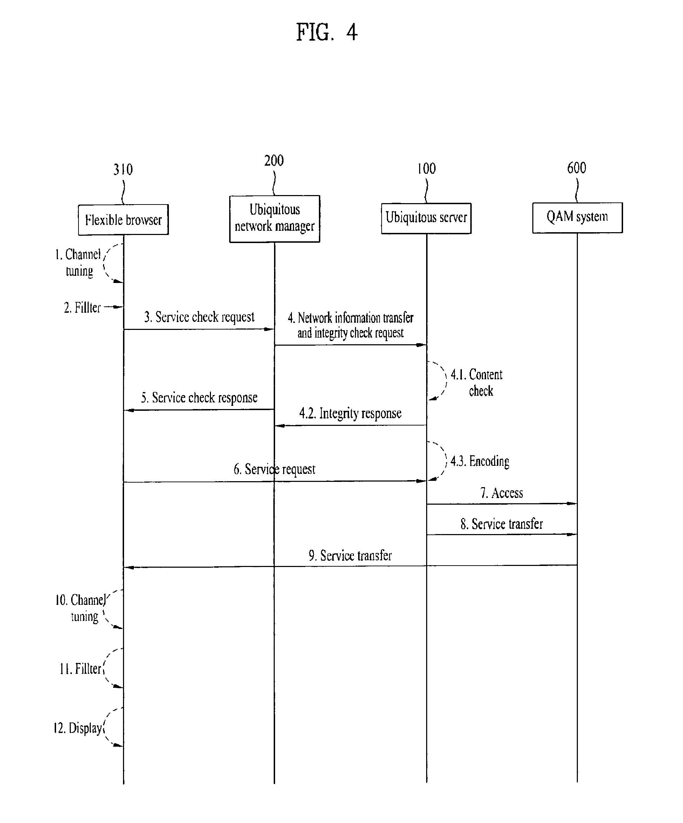

FIG. 4 is a flow chart illustrating an exemplary procedure for providing an interactive service according to an embodiment of the present invention. This embodiment may be synchronous or asynchronous implemented in order to improve service response speed and to achieve higher performance.

1. Channel Tuning

The viewer provides a signal for selecting a service to the receiving terminal 300 through an external input device and the receiving terminal provides the signal to the flexible browser 310. The flexible browser 310 tunes to a channel in which an interactive service is received.

The tuned channel needs to include information for execution of the interactive service. The flexible browser 310 performs filtering on this information.

2. Filter

The flexible browser 310 performs a filtering process on a TS of a currently received channel. When the flexible browser 310 performs the filtering process, the flexible browser 310 determines whether or not interactive service execution information is present with reference to a program number and a PID of the currently viewed channel.

Upon determining in the filtering process that interactive service execution information is present, a next process is performed. If no interactive service execution information is present, a general TV viewing procedure is performed.

The ubiquitous server 100 generates and provides the interactive service execution information (in the form of an MPEG2-TS) to the QAM system 600. The interactive service execution information may be provided after being multiplexed with other digital cable system information.

The interactive service execution information includes a service directionality type (interactive or one-way), a service type, a service ID, and the like. Thereafter, the interactive service execution information may be provided to a system that creates content.

3. Service Check Request

The flexible browser 310 makes a service check request to the ubiquitous network manager 200.

When making a service check request, the flexible browser 310 transmits a TSID, a frequency, a program number, a service ID, and a URL of a currently viewed channel, and MAC address information of the receiving terminal.

The URL information is needed when requesting a URL of Internet content which has no service ID when the content is open content.

Making a service check request allows the receiving terminal 300 to secure a network bandwidth for receiving an interactive service and allows the ubiquitous server 100 to redistribute network resources. In addition, it is possible to verify service (content) integrity.

Information of network usage and a port of each device of the QAM system 600, session information of the ubiquitous server 100, and interactive service content management information are present in the management DB of the ubiquitous network manager 200.

Content of the management DB of the ubiquitous network manager 200 and content of the management DB of the ubiquitous server 100 are synchronized with each other.

4. Network Information Transfer and Integrity Check Request

The ubiquitous network manager 200 transfers information of the QAM system 600 which can perform network transmission to the ubiquitous server 100.

The ubiquitous network manager 200 requests the ubiquitous server 100 to check integrity of the interactive content. The transferred information may include a QAM port, a service ID, a PID, a MAC address, URL information, and the like.

A response standby related procedure is asynchronously performed from the viewpoint of the flexible browser 310 (i.e., from the viewpoint of the viewer).

4.1 Content Check

Viewing authority is checked.

The ubiquitous server 100 checks whether or not it is possible to service content for which an integrity check request has been made. When the content can be provided, it is checked whether or not encoded image data is present in the ubiquitous server 100.

If no encoded image data is present, the ubiquitous server 100 performs an encoding process for fast response.

In the case of Walled Garden type content which can always be serviced, encoded image data is managed for each service component.

The time to encode open content such as Internet content is set to a time after content check of section 3.2 is performed since the encoding process is performed upon receiving a request for the content.

Frequently used open content may contain image data that have been previously encoded using a cache policy.

The viewing authority of the receiving terminal 300 (viewer) that has requested the service and the authority for the content are compared and the viewing authority response result is transferred.

4.2 Integrity Response

The ubiquitous server 100 transfers a response to the integrity check request to the ubiquitous network manager 200. If serviceable information is transferred to the ubiquitous network manager 200, a next procedure is normally performed. If an error code is transferred to the ubiquitous network manager 200, the flexible browser 310 performs processing for the error code.

A successful response result may be classified into two types, a normal content confirmation result and an authority confirmation result indicating that it is possible to view the content.

The following is an exemplary error code classification. That is, an error code of '200' may indicate that there is no viewing authority such that it is not possible to use the service, an error code of '300' may indicate that service validity period has expired, and an error code of '404' may indicate an unknown error.

4.3 Encoding

The ubiquitous server 100 performs an encoding process for content that has not been cached.

The following is a detailed procedure for encoding content in the ubiquitous server 100.

First, the browser module 110 of the ubiquitous server 100 performs content. Here, the procedure may be performed in the following manner.

- The executed screen is encoded into an image.

- A focus-movable region and a simple image region are separately encoded.

- The image is compressed and is encrypted when needed.

- Conversion into MPEG2-TS

Here, the encryption process may be performed directly by an external transmission system.

5. Service Check Response

The ubiquitous network manager 200 transfers a result of the service check (or confirmation) request to the flexible browser 310. The transferred information includes information of a bandwidth for transmission of service content and information of the ubiquitous server 100 that performs service generation.

The transferred information includes the URL, the PID, and the port of the QAM 600, and the IP of the ubiquitous server 100, etc.

6. Service Request

The flexible browser 310 performs service request.

7. Access

The ubiquitous server 100 accesses (or connects to) the QAM system 600. Here, the ubiquitous server 100 accesses the QAM system 600 through a QAM port, information of which has been received in the network information transfer procedure of the above section 4.

8. Service Transfer

The ubiquitous server 100 transfers, through an MPEG2-TS, encoded content information to a port through which the ubiquitous server 100 has accessed a device of the QAM system 600.

9. Service Transfer

The device of the QAM system 600 transmits an MPEG2-TS through a corresponding bandwidth.

10. Channel Tuning

The flexible browser 310 tunes to a channel of a frequency at which the interactive service is transmitted.

11. Filter

The flexible browser 310 filters a PID of a channel including the interactive service to receive interactive service content.

The PID is generated as an arbitrary PID when the ubiquitous server 100 performs packetization. The flexible browser 310 performs filtering using the generated PID. The PID of each interactive content item is shared by both the ubiquitous network manager 200 and the ubiquitous server 100.

12. Display

The flexible browser 310 drives (or activates) the received interactive content on the receiving terminal.

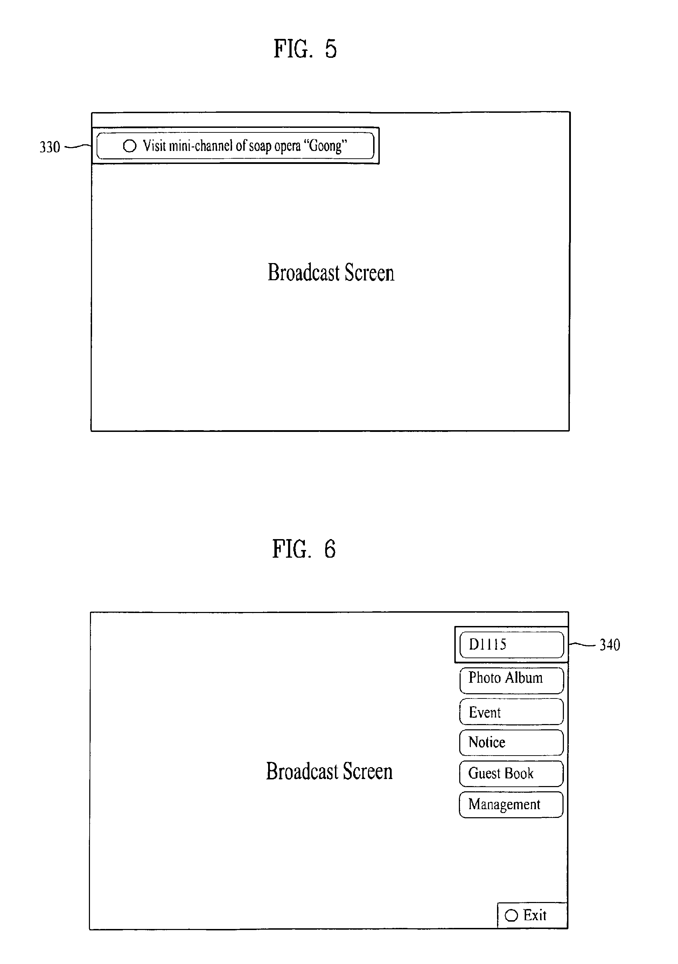

A detailed example of the above procedure will now be described with reference to FIGS. 5 and 6.

Channel Tuning

The receiving terminal 300 moves to channel 100 in which an interactive service is received.

Filter

The flexible browser performs a filtering process by determining whether or not interactive service execution information is present in a stream of a currently received channel. Upon determining in the filtering process that interactive service execution information is present, the receiving terminal 300 performs a process of a trigger 330 for service execution according to an interactive service type. In an example of FIG. 4, the trigger 330 displays a red key on the screen at a left upper portion thereof to allow the viewer to execute a service cooperative with a currently viewed program by depressing the red key.

Service Check Request

When the user has identified the trigger 330 and has selected an input for executing an interactive service, the flexible browser transfers service check request information to the ubiquitous network manager through a return path. Here, the flexible browser transfers information of a network at which the receiving terminal 300 is located, unique information of the receiving terminal 300, currently viewed channel information, and information of a service to be executed.

Network Information Transfer and Integrity Check Request

Upon receiving the service check request, the ubiquitous network manager transfers network information to the ubiquitous server 100 and requests the ubiquitous server 100 to check integrity of the service to be executed. The network information transferred to the ubiquitous server 100 includes currently available network information, and information of a service to be executed and a PID value to be processed on the receiving terminal 300 when this information is transferred and execution information is encoded and transferred as an MPEG2-TS.

Content Check

The ubiquitous server 100 performs processes such as checking of presence of a cache, integrity checking, and authority checking for the requested service. When it is possible to normally transmit service information to the receiving terminal 300, it is possible to transfer a normal check response code to the receiving terminal 300.

Service Check Response

The ubiquitous network manager transfers information of a network that is available for the flexible browser of the receiving terminal 300, information of the ubiquitous server 100, and a PID value of the received service. The ubiquitous network manager also processes the integrity check response.

Here, in the cooperative service characteristics, a process associated with display of the trigger 330 at the left side of the screen displayed in the example is performed according to a schedule of the corresponding program. The trigger 330 is also terminated when event information of the program is terminated.

When the channel 100 in which execution information of the cooperative service is received is switched to another channel, display of the trigger 330 is removed by the flexible browser.

A flexible browser service download example will now be described with reference to FIG. 6.

1. Channel Tuning

The receiving terminal 300 switches to channel 100 in which an interactive service is received.

2. Encoding

The ubiquitous server 100 encodes content to be transmitted. The ubiquitous server 100 protocolizes and encodes various information such as various types of data for providing content, link information for linking a service execution to another service, and information regarding a focus process.

When the content is frequently used content, cache functions are individually used for each service and for each data type in order to simplify an encoding procedure and to improve response speed. Processes for compressing and encrypting encoded information and then converting it into an MPEG2-TS packet are performed in the ubiquitous server 100.

3. Service Request

The flexible browser of the receiving terminal 300 transfers a service transmission request to the ubiquitous server 100.

4. Access and Transfer

The ubiquitous server 100 transfers a stream of a generated service to a defined port of the QAM system device.

5. Service Transmission

The QAM system device transmits a service stream through a specified bandwidth.

6. Filter

The flexible browser filters a defined PID to filter a stream of content that has been generated by the ubiquitous server 100 and transmitted through the QAM system device.

7. Display

The flexible browser analyzes and executes the filtered and parsed content.

The receiving terminal 300 requests execution of a cooperative service through a trigger and receives a cooperative service generated by the ubiquitous server 100 and the flexible browser displays the received cooperative service on the screen.

FIG. 6 illustrates an exemplary cooperative service screen in which an A/V image that has been viewed is displayed as a Picture In Picture (PIP) in a specific region of the service screen.

The cooperative content service may be allocated an address of a Channel Domain System (CDS) channel or a URL. A CDS channel address 340 is displayed at the right side of the screen as denoted by "D115". When a corresponding address is directly entered, channel is directly switched to a channel in which the cooperative content service is transmitted such that it is possible to immediately use the A/V and cooperative service. Details of a Channel CDS system and method have been introduced in Patent Application Nos. 10-2003-0078155, 10-2004-0064160, 10-2004-0072420, and 10-2005-0004949 that were filed by the present Applicant.

Information that automatically changes with time (for example, variable text information such as a trigger or a notice) may be protocolized and transferred from the ubiquitous server 100 to an independent data module. Accordingly, it is possible to perform a process for changing and displaying only a corresponding region.

On the other hand, it is possible to tune and terminate a flexible browser service in order to use another service while an interactive service is in use.

It is possible to request another service while an interactive service is in use through a ubiquitous system. The following procedure is performed in order to improve response speed of the receiving terminal 300 and to efficiently use the ubiquitous server 100 and the network.

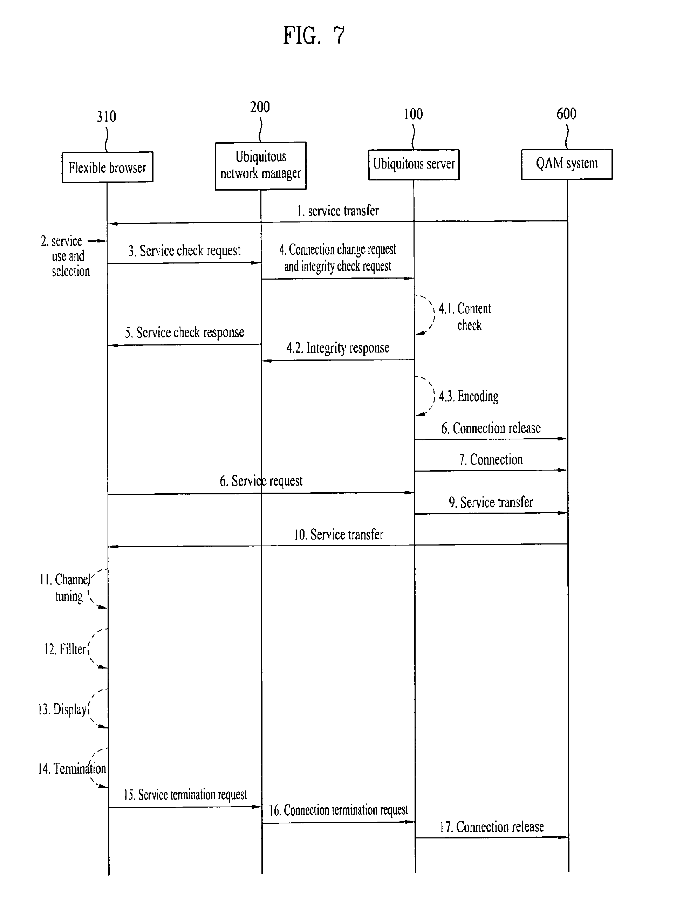

FIG. 7 is a flow chart illustrating another exemplary procedure for providing an interactive service according to an embodiment of the present invention. The procedure for providing an interactive service according to the embodiment of the present invention will now be described with reference to FIG. 7. This embodiment may be synchronous or asynchronous implemented in order to improve service response speed and to achieve higher performance.

1. Service Transfer

The flexible browser 310 receives an interactive service and a one-way service through the ubiquitous server 100.

2. Service Use and Selection

The viewer uses the service using the flexible browser 310.

When there are available resources of a network and a content scenario, it is possible to receive data through a PID of a bandwidth that is being received without performing channel tuning or filtering change processes.

When available resources of a network and a content scenario are insufficient, content of a received service may be transferred to another bandwidth. Here, the flexible browser 310 makes a service change request of procedure 3.

(For example, when a link for moving to a different service is being displayed on a screen while an interactive service is in use, the viewer may receive content of the different service through a different bandwidth by selecting the link.)

When a service is being used, connection of the flexible browser 310 of the receiving terminal to the ubiquitous server 100 is managed as connection state information and transmission is continuously performed with the same frequency and PID when channel tuning and frequency change are unnecessary. Since channel tuning and filtering processes are not performed at the receiving terminal 300, this method allows efficient responses to continuous requests occurring when content is in use.

3. Service Change Request

When requesting service change, the flexible browser 310 transfers a TSID of a currently viewed channel, a frequency, a program number, a service ID of content that a request to use has been made (a URL of content when it is open content having no service ID), a service tag, and the like to the ubiquitous network manager 200.

A value having the same meaning as the service check request of the service download procedure (1.1 flexible browser service download) is transferred. The service tag value is information indicating whether there is a need to make a network change request of the requested service or it is possible to perform transmission through the same network as that through which reception has been performed without requesting network change.

4. Connection change and integrity check request

The ubiquitous network manager 200 checks network state for performing a process for service change request and transfers QAM port and PID information to the ubiquitous server 100.

If the service tag information received from the flexible browser 310 indicates that there is no need to change the bandwidth and the current state is that it is possible to use the same bandwidth as that of the device of the QAM system 600, the ubiquitous network manager 200 transfers the same QAM port information to the ubiquitous server 100 and also transfers the same PID to the ubiquitous server 100.

If the service tag information received from the flexible browser 310 indicates that there is a need to change the bandwidth or the current state is that it is not possible to use the same bandwidth as that of the device of the QAM system 600, the ubiquitous network manager 200 transfers previously used QAM system device information and PID information and QAM system device information and PID information that are going to be used to the ubiquitous server 100.

4.1 Content Check

4.2 Integrity Response

4.3 Encoding

5. Service Check Response

The ubiquitous network manager 200 transfers a result of the service check request to the flexible browser 310. The transferred information includes information of the bandwidth through which service content is to be transmitted and information of the ubiquitous server 100 that generates the service.

The transferred information may include an IP of the ubiquitous server 100, a QAM port, a PID, a URL, and the like. When transmission network information is changed due to information change, the changed information is transmitted.

6. Connection Release

If transmission is performed through a network other than a network which has been used for transmission due to the connection change request, the ubiquitous server 100 releases connection to the port of device of the QAM system 600 so as to perform a process for returning resources of the network that has been used for transmission.

If the same network information as previously used network information is used for the connection change request, procedures 6 and 7 are not performed since content is transmitted through the same network.

A process for returning resources such as encoded information that have become unnecessary due to connection change is performed.

7. Connection

The ubiquitous server 100 connects to a newly allocated device of the QAM system 600. That is, the ubiquitous server 100 connects to a QAM port that has been received in the procedure 4 "connection change and integrity check request".

8. Service Request

The flexible browser 310 requests the ubiquitous server 100 to perform content transmission of a service to which a request to perform service change has been made.

9. Service Transfer

A stream encoded in the ubiquitous server 100 is transferred to a specified device of the QAM system 600.

10. Service Transfer

The QAM system 600 transmits service content through a specified bandwidth.

11. Channel Tuning

If the received information has been transmitted through a new bandwidth, the flexible browser 310 performs channel tuning through the new bandwidth received from the ubiquitous network manager 200.

12. Filter

The flexible browser 310 filters a PID of a channel in which an interactive service is included to receive content of the interactive service.

The PID is generated as an arbitrary PID when the ubiquitous server 100 performs packetization. The flexible browser 310 performs filtering using the generated PID. The PID of each interactive content item is shared by both the ubiquitous network manager 200 and the ubiquitous server 100.

13. Display

The flexible browser 310 drives (or activates) the received interactive content on the receiving terminal.

14. Termination

A service termination event is generated at a time at which content is terminated according to a schedule of content or the viewer's intention.

The viewer may terminate the content on the receiving terminal 300 by selecting an exit button or a hotkey of another service through an external input device. In the case where the service is associated with a scheduled similar to a cooperative service, a service using the ubiquitous system is terminated at the execution schedule termination time.

The flexible browser 310 terminates content which has been received and executed when the service is terminated and performs a process for returning resources of the receiving terminal 300.

15. Service Termination Request

When a termination event is generated, the flexible browser 310 transfers a service termination request to the ubiquitous network manager 200.

Data transferred to the ubiquitous network manager 200 allows the ubiquitous server 100 and the QAM system 600 to perform a process for returning resources for content transmission.

The data transferred to the ubiquitous network manager 200 due to termination request may include a TSID, a frequency, a program number, a service ID, a URL, and a MAC address.

16. Connection Termination Request

The ubiquitous network manager 200 returns network resources managed in the management database 230 and updates information of the ubiquitous server 100 to enable transmission of new content.

The ubiquitous network manager 200 transfers a connection termination request to the ubiquitous server 100 so as to stop generation and transmission of the corresponding service.

17. Connection Release

The ubiquitous server 100 releases ongoing connection to the device of the QAM system 600.

The released device of the QAM system 600 performs a process for returning resources so that another service can be transmitted to the corresponding port.

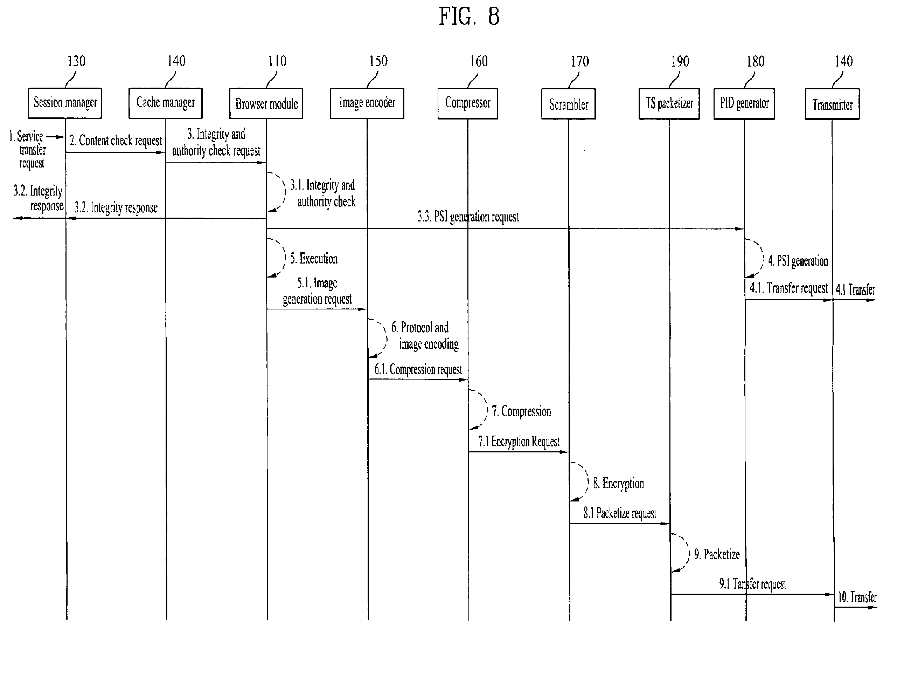

FIG. 8 is a flow chart illustrating a procedure for generating content of an interactive service according to an embodiment of the present invention. In the following, a procedure in which the ubiquitous server 100 verifies and generates content through 4.1 "content check, 4.2 "integrity response", and 4.3 "encoding" procedures among the above-mentioned procedures will now be described based on detailed module operations of the ubiquitous server 100 with reference to FIG. 8.

A procedure for generating content through a ubiquitous system is described below. When a request to generate content has been received from the flexible browser of the receiving terminal 300 or an event such as an automatic content generation event at a specific time (for example, a scenario such as one-way information transfer such as a notice in an operation scenario) has occurred, the ubiquitous server 100 encodes service content into a transmittable format and transmits the service content through a QAM system.

Generally, content execution and encoding processes of the ubiquitous server 100 are sequentially performed. However, each process may be split according to several conditions associated with performance improvement or partial function check (authority check, content integrity check, or the like).

1. Service Transfer Request

When a service transfer request is received from an external system (for example, when network information transfer and integrity check requests are received from a ubiquitous network manager) or when there is a need to transmit a service according to an operation rule, the ubiquitous server 100 starts content execution and encoding processes.

The session manager 130 of the ubiquitous server 100 allocates resources to a corresponding session and starts managing the resources in order to execute and generate content.

Network information and service information are received when a request is received from a ubiquitous network manager at the user's request. However, when there is a need to generate a service according to an operation rule, the ubiquitous server 100 requests network information from the ubiquitous network manager and is allocated valid network resources and transmits a service using the allocated resources.

2. Content Check Request

When previously transmitted raw data is present in the cache manager 140, the browser module 110 does not perform new content execution and encoding. A transmission process is immediately performed using the allocated network information.

Validity period and authority of the previously transmitted raw data is checked in the cache manager 140.

3. Integrity and Authority Check Request

When no reusable raw data is present in the cache manager 140, an integrity and authority check request is transferred to the browser module 110.

3.1 Integrity and Authority Check

The browser module 110 checks an execution authority of data to be executed and compares the execution authority with that of the receiving terminal 300. When the receiving terminal 300 has no execution authority, the ubiquitous server 100 transfers a no-authority code to the receiving terminal 300 to terminate the corresponding procedure.

The browser module 110 checks validity period, normal operation processes, and the like of the data to be executed. When the state of the data is that it is not possible to service execution of the data, the browser module 110 transfers an error code corresponding to the state to the receiving terminal 300 to terminate the corresponding procedure.

There are two methods of checking viewing authority, one being performed at the server and the other being performed in cooperation with the CAS module of the receiving terminal 300.

In the method of checking viewing authority at the server, the ubiquitous server 100 compares authority of the receiving terminal 300, which has requested execution, and authority of a service to be transferred in cooperation with the Subscriber Management System (SMS) in order to check integrity.

In the method of checking viewing authority in cooperation with the CAS module of the receiving terminal 300, the server scrambles and transmits corresponding content. After receiving the content, the receiving terminal 300 determines whether or not it has an authority to execute the content in cooperation with the CAS module. Upon determining that it has the authority, the receiving terminal 300 descrambles and displays the content and, upon determining that it has no authority, the receiving terminal 300 does not display the content.

Although any of the two methods may be used as a system cooperation method, the first method is more efficient since server resources and network resources are used.

3.2 Integrity Response

Results of integrity and authority checks at the browser module 110 are transferred to the flexible browser of the receiving terminal 300.

In the case where an error code has been received such that there is no need to transmit the service, the session manager 130 performs an operation for releasing the corresponding session. The flexible browser of the receiving terminal 300 performs a next process based on the received result value.

3.3 PSI Generation Request

In the case where the browser module 110 needs to transmit service information to the PID generator 180 according to results of integrity and authority checks, the browser module 110 requests the PID generator 180 to generate PSI information using network information allocated by the ubiquitous network manager.

The PID generator 180 may be an internal or external ubiquitous system. When the PID generator 180 is an external system, the PID generator 180 needs to be able to generate PSI information using received network information.

4. PSI Generation

PSI information is generated.

The flexible browser of the receiving terminal 300 can receive service information by tuning to a channel transmitted through corresponding PSI information.

4.1 Transfer Request

The generated PSI information is transferred through the transmitter 191.

In the sequence diagram, it is defined that PSI is generated and transmitted immediately after integrity is checked. However, the generation and transmission time is not important.

(Although PSI information is received by the receiving terminal 300 due to a system environment different from the network state, the process may be performed by the flexible browser in the case where actual service information is not received through the tuned channel.)

5. Execution

A service corresponding to service ID or URL is executed.

The executed part may be text and a module, which are dynamically changing, and only information which has been partially changed from the transmitted information may be transmitted.

5.1 Image Generation Request

A service execution result may be protocolized and encoded in the image encoder 150.

6. Protocol and Image Encoding

The image encoder 150 protocolizes and encodes the executed result.

The protocolized and encoded information may include various information such as lifecycle information of a service to be transmitted, unique information of each service, focus process information, individual protocol information of various data types, and information required for the flexible browser of the receiving terminal 300 to perform a caching process.

The protocol generated by the image encoder may also include link information for executing and connecting to a service other in addition to data displayed and used in the receiving terminal 300.

6.1 Compression Request

A compression request is transferred to the compressor 160 so as to compress the encoded transmission information.

7. Compression

The compressor 160 compresses information generated by the image encoder 150.

7.1 Encryption Request

An encryption request is made to the scrambler 170 so as to perform encryption.

8. Encryption

Encryption is performed.

Information that must be encrypted such as personal information and payment and billing information is encrypted separately for each data unit.

Depending on system configuration, a process for encrypting broadcast service screen and content information may be performed by an external encryption system (transmission system) or may be performed by an encryption module in the ubiquitous server 100.

A data unit that must be encrypted may be divided into data units at the time of encoding at the image encoder 150 and only corresponding information may be encrypted.

8.1 Packetization Request

A request to packetize encrypted transmission information is transfered.

9. Packetization

A packetization process is performed with reference to a PID defined so as to allow the receiving terminal 300 to receive corresponding information.

9.1 Transfer Request

A request to transfer the generated TS is made so that the generated TS can be transmitted from the QAM system device.

10. Transfer

The transmitter 191 transmits the TS through an allocated port of the QAM system device.

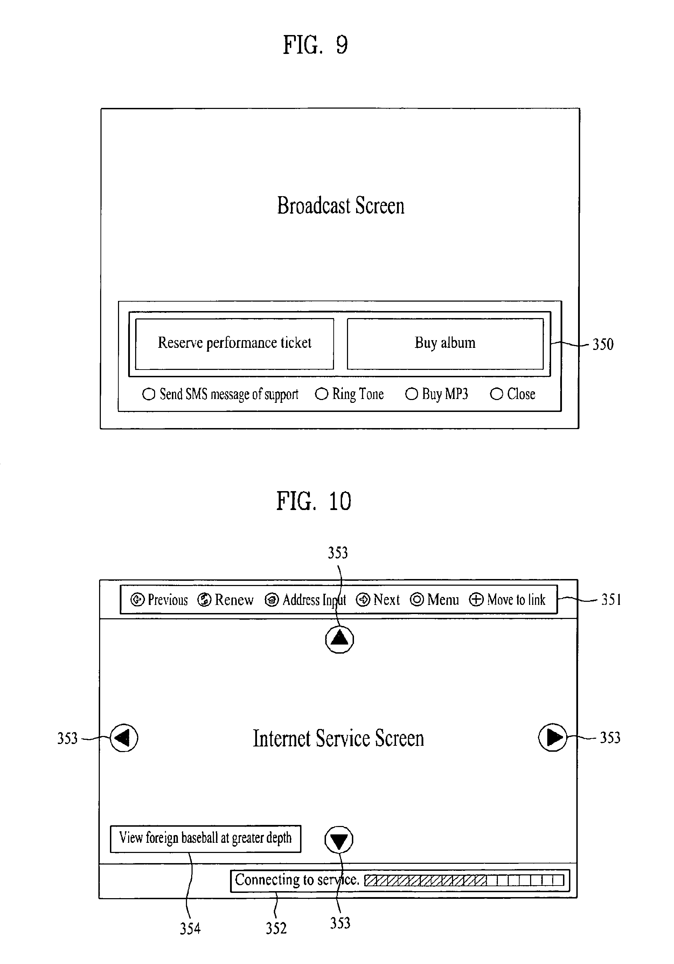

FIG. 9 is a screen illustrating an exemplary T-commerce service provided according to an embodiment of the present invention.

An exemplary cooperative T-commerce service using a ubiquitous system will now be described with reference to FIG. 9.

Examples of the cooperative service using a ubiquitous system include a T-commerce service in a live performance program and music video and an interactive service that is provided in a cooperative manner as an additional service.

Event information of an interactive service may cooperate with (or may be made cooperative with) schedule information and PSIP/SI information of an A/V program to allow the flexible browser of the receiving terminal 300 to check cooperative information (or cooperation information) of the interactive service and to allow the interactive service to be activated only during the viewing time of a channel through which the A/V program is broadcast.

The flexible browser communicates information of the T-commerce interactive service, which is cooperative with the program, with the ubiquitous server 100. The ubiquitous server 100 encapsulates payment information and paid service information into an encryption protocol and communicates the same with the content management system (CMS). The CMS performs processing on a T-commerce request of the receiving terminal 300 while exchanging data with a LOB system (which may be a CC/PP system) that performs processing on a payment or paid service.

The trigger 350 is executed to perform an interactive T-commerce service. Here, a left/right main function and an additional function allocated may be selected. Each function may be connected to a previously optimized application such as open content or a Walled Garden service. A process for a purchase-related function such as a ticket booking function, a music album purchase function, or an MP3 purchase function is performed while corresponding information is exchanged between the server and the receiving terminal 300 through the encryption module. The flexible browser of the receiving terminal 300 may perform processing only on the payment part through a Pay Gate module in a plug-in manner or through cooperation with the module in the receiving terminal 300.

In the following, an exemplary service execution method and an exemplary open content browsing method for a ubiquitous system will now be described with reference to FIG. 10.

Specifically, a method for performing an open content navigation process and exemplary use of execution information and link information for moving to another service in open content are described below. The ubiquitous system can generate, encode, and service an image of content information of an unlimited amount of Internet content and content information of other media (such as terrestrial, IPTV, Wibro, and DMB). Since it is necessary to represent services of various media according to a data broadcast environment and to perform navigation through an external input device of the receiving terminal 300, it is necessary to commonly handle focus process and function key input parts.

The flexible browser handles the common focus display portion 351 for each service type. For a service that is not suitable for the input and a data broadcast service UI such as open content, the common focus display portion 351 is activated to perform a focus process which optimizes it to an external input device of the receiving terminal 300.

Content created according to a digital cable broadcast such as a Walled Garden service may not be subjected to display of the common focus display portion 351. Service type related setting is performed upon service registration and corresponding information is included in interactive service execution information such that the flexible browser of the receiving terminal 300 can selectively handle it.

The common focus display portion 351 typically displays functions associated with color keys and representative function keys. For example, the common focus display portion 351 displays, in association with their allocated functions, keys such as a red key which is a "previous" key corresponding to a function to move a previous history page, a green key which is a "refresh key" corresponding to a function to re-call and re-display an open content display screen, a yellow key which is an "address input" key corresponding to a function to display a URL, CDS address input popup so as to directly move content, a blue key which is a "next" key corresponding to a shortcut to a designated lower-level screen, an OK key which is a "menu toggle" key corresponding to a function to selectively display and remove a common focus display portion which covers a certain portion of the screen or a so-called menu, a details key which is a "view link toggle" key corresponding to a function to toggle and apply a view movement function and a link movement function to up/down/left/right navigation buttons.

A service status bar 352 may be displayed in a specific region of the common focus display portion 351. The service status bar 352 functions to check a communication state and a download state of the network manager, the ubiquitous server 100, and the flexible browser and to indicate the checked communication and download states in percentage and number. In the conventional data broadcast service download display method, an empirical service download time is calculated and a progressed time is indicated in a GUI. However, this method has a limitation in that uncertainty of the indicated time and GUI are constantly repeated. The present invention employs a service status bar to overcome such a limitation.

A remaining time of a cooperated A/V program of a cooperative service may be displayed on the service status bar 352 to present the remaining execution time of the cooperative service to the viewer. This method has an advantage in that, when schedule information is short as with an A/V advertisement, an available time of a cooperative service can be effectively displayed to the viewer.

Open content such as an Internet service actually has no limitations to the length of a service screen or the amount of displayed content. Specifically, in the case of open content, a large amount of data may be displayed to the upper, lower, left, and right sides and a content display blank may occur due to a left-right resolution difference. View movement display portions 353, which are function keys allowing the user to view content using up/down/left/right navigation keys, may be employed to overcome this problem. The view movement display portions 353 indicate that content is visually available to the viewer. An alpha value may be applied to a direction (or navigation) GUI displayed so as not to disturb content viewing so that text and content information is normally displayed at the rear side of the direction GUI. A link focus 354 may also be displayed to allow the viewer to move to another service in a toggling manner.

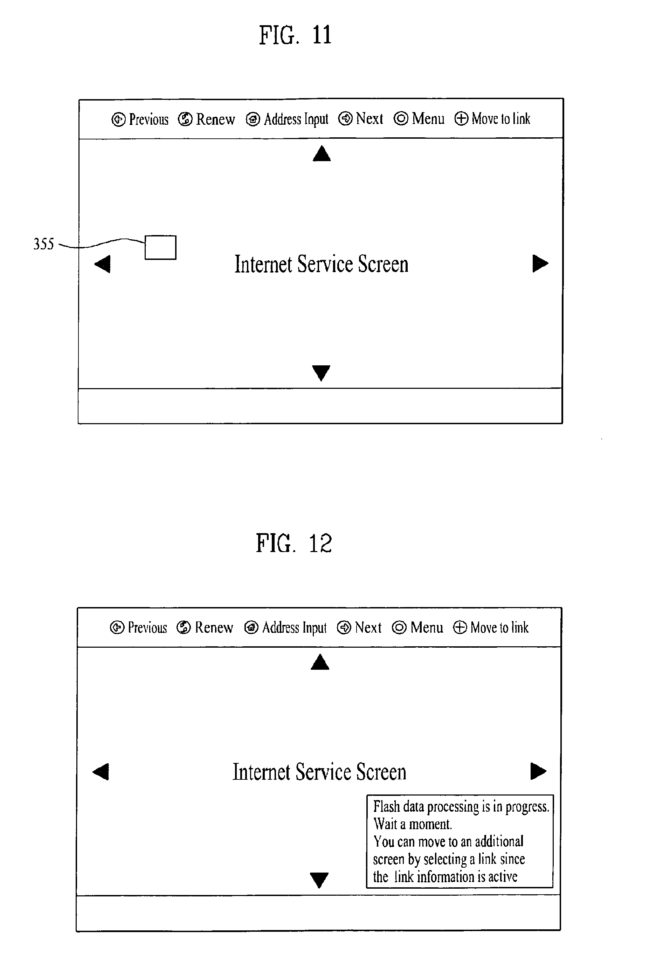

FIG. 11 illustrates an exemplary screen in which a mouse focus of actual Internet content is directly applied. The ubiquitous server 100 may perform a focus (or mouse) process based on position information, position change speed, and the like of focus information that is based on X and Y coordinates and the flexible browser.

A detailed button of the common focus display portion has a function to toggle view links. The view link toggle function may be defined as a function to toggle between a function to move a view region using navigation keys and a function to move a link region in a designated view region using navigation keys. Specifically, when a direction GUI is being displayed, i.e., when a view process is performed, the viewer can move the content screen by depressing up/down/left/right navigation keys and, when no direction GUI is present, the link focus 355 may be displayed as a GUI and a GUI image of the view link toggle function may be activated as a link focus. The GUI may be displayed in an exclusive manner to allow the viewer to confirm a current focus process state.

When the process of the link focus 355 is being performed, it is possible to navigate each link to which the link focus 355 is allocated by depressing up/down/left/right buttons. The link focus 355 may be information that is generated by protocolizing and encoding link information of a screen to be moved to or link information allowing movement to a different service, after being set in content when the content is encoded in the ubiquitous server 100, and is then transferred to the flexible browser of the receiving terminal 300.

An arrangement priority on the content screen may be assigned and arranged for the link focus 355 and an input sequence may be arranged to allow the viewer to intuitively move the link focus 355 when inputting a navigation key. When a specific time has elapsed while the link focus 355 is displayed, a summary description of link information where the focus is currently located may be displayed on the screen.

The following is a description of a method for utilizing a ubiquitous system for servicing various multimedia information and multiple media content.

To provide open content such as Internet content and content of other media, it is necessary to be able to service various types of application services and multimedia data. The ubiquitous system supports plug-in-based hybrid modules in order to process such various data.

The ubiquitous server 100 converts CP/PP information received through the CMS into an image and encodes the image and transmits encoded data to the flexible browser of the receiving terminal 300. On the other hand, multimedia information is directly transmitted after being encapsulated and protocolized. The flexible browser of the receiving terminal 300 includes a plug-in module of each multimedia type to receive and process multimedia information.

When the multimedia information is protocolized, the multimedia information is encapsulated with the type and identification information of the multimedia information. The flexible browser processes the multimedia information asynchronously with the corresponding service. For example, in the case where flash information among displayed Internet content information has not been processed in the plug-in after being downloaded, information indicating that download and processing is in progress is displayed.

Data that can be processed in a plug-in fashion may be data of an application such as an OA or game application that is running on a PC or may be an unbound application such as a pay gateway that has been used in a data broadcast service in the conventional receiving terminal 300.

FIG. 12 illustrates a processing state of flash advertisement data among transmitted content when a plug-in module has not completely processed the received flash advertisement data. To increase service responsiveness, the flexible browser performs processing on the service asynchronously with processing of the plug-in unit. When the flexible browser has been terminated or lifecycle of the service has been changed, processing of resources of the plug-in unit or the like may also be performed by the content management module of the flexible browser. Even when the plug-in process has not been completed, a corresponding focus process may be performed by the flexible browser.

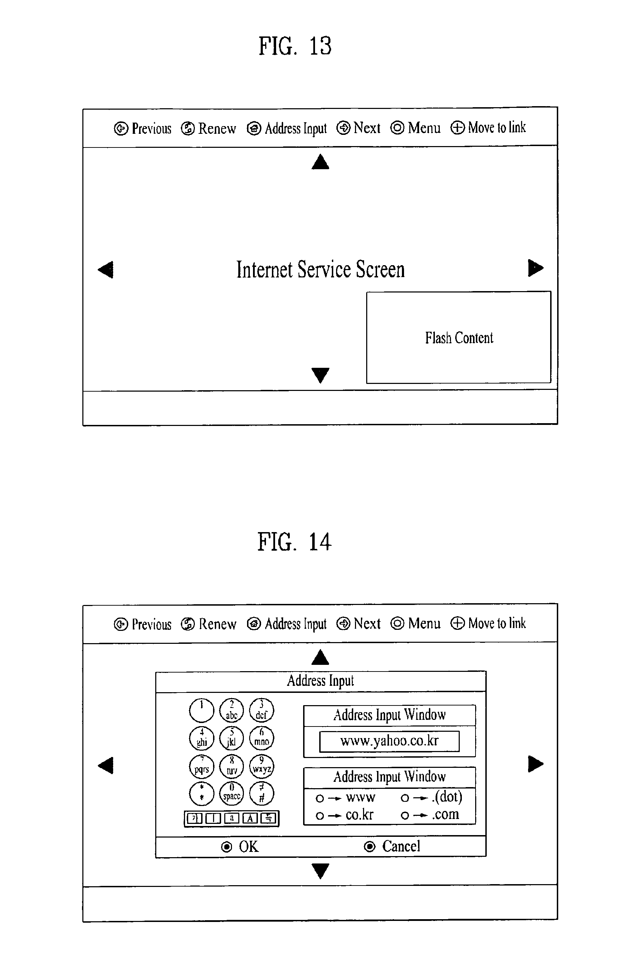

FIG. 13 illustrates an exemplary state in which a flash data process has been completed through a plug-in module.

A system for supporting the processing of the receiving terminal 300 for enabling smooth open content use and a method for utilizing the system will now be described with reference to FIG. 14. The method is performed on a GUI basis.

A text input method is needed to use content of various media and open content such as Internet content. The flexible browser may receive and process address and utilization information in association with a conventional text input system (for example, an automata system). If an external input device that provides a smooth input function such as a keyboard will be provided in addition to a remote controller in a future data broadcast environment, it is possible to perform text input directly using the remote controller without the need to separately cooperate a text input system.

An address input button on a common focus display portion of the flexible browser is depressed to activate an address input popup including a text input function. The viewer can move content by directly inputting an Internet content URL or a CDS address that the viewer has already known through the popup. For easy input, a prescribed value of a known address input system such as "www," ".(dot)", ".co.kr", or ".com" may be allocated to a color key such that the prescribed value is input through the color key.

The protocol manager of the flexible browser protocolizes a received address value such as a URL or a CDS and transmits the protocolized value to the ubiquitous server 100 to request new service change.

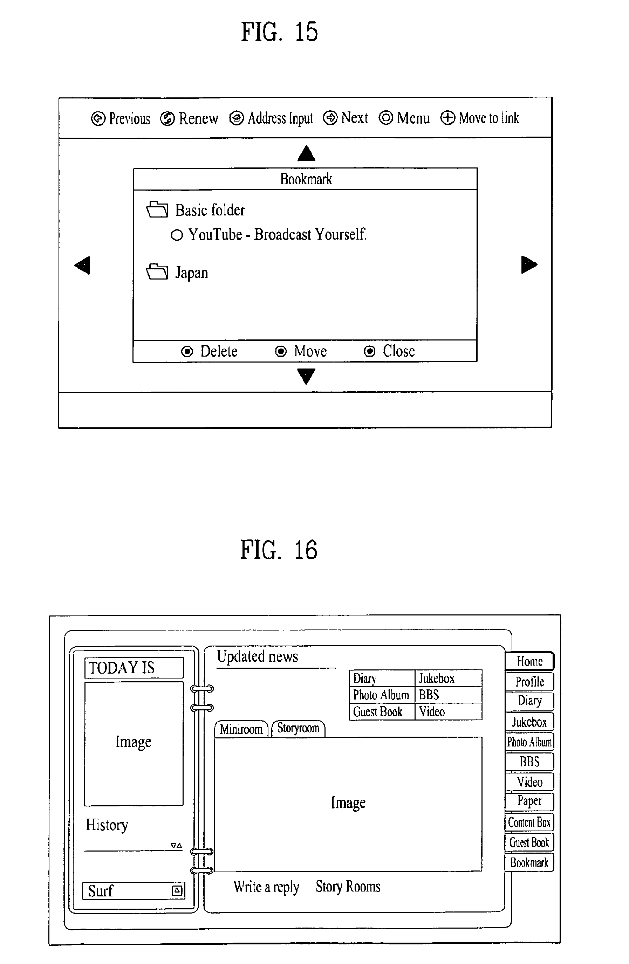

A system for moving various multimedia information and multiple media content and a method for utilizing the system (in association with bookmark and history management) will now be described with reference to FIG. 15.

Fast access to various content is essential to smoothly use an unlimited amount of open content. The ubiquitous system provides a bookmark function such as a favorite function and a history function, similar to the PC. A specific button of a common focus display portion is depressed to activate the bookmark function. A system in which bookmark information is stored may be the ubiquitous server 100 or may be a flexible browser.

The bookmark information may be a service address such as a URL and a CDS of specific content and the history information may be an address of previously accessed content. The bookmark information may be stored in the browser module 110 of the receiving terminal 300 or in the ubiquitous server 100 and the history information may be stored through processing of the cache manager 140 and the session manager 130 of the ubiquitous server 100. The history information is not unlimitedly managed but instead a content movement and a movement time of the user are calculated and the history information is managed according to the calculated content movement and movement time.

The bookmark information may be managed by the flexible browser and may be managed by the ubiquitous server 100 for each receiving terminal 300 or each accessed user (for example, through allocation of information such as access user management information and an ID).

In a method of managing bookmark information in the flexible browser, a specific number of information items such as bookmark information, a service name, a service ID, URL and CDS information, and a service type may be stored in a specific memory region of the receiving terminal 300. When information is used through the bookmark function in the flexible browser, the flexible browser reads a memory region of the receiving terminal 300 to retrieve and display a stored bookmark value on the screen and performs a movement operation according to user selection.

In a method of storing and managing a bookmark value in the ubiquitous server 100, bookmark information may be stored as information such as a service name, a service ID, URL and CDS information, and a service type with reference to the receiving terminal 300 and access user information and, when a bookmark is used, a predefined protocol is used to transfer bookmark information to the flexible browser of the receiving terminal 300 to allow use of the information.

The history function may be executed by depressing a previous button on the common focus display portion of the flexible browser. A service can be provided in real time (without encoding time) by reading raw image data of a recently used service managed in the cache manager 140 of the ubiquitous server 100 and a temporary address storage function of the session manager of the ubiquitous server with reference to information of the session between the receiving terminal 300 and the ubiquitous server 100.

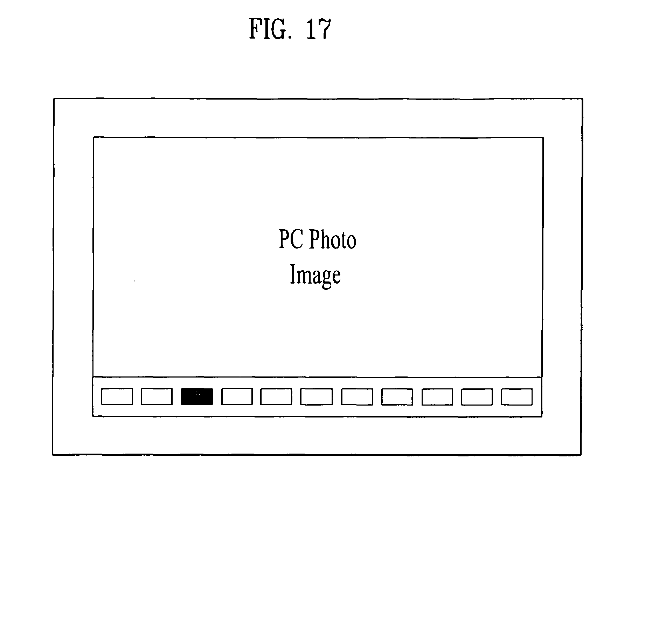

A method for utilizing information of other media using a ubiquitous system will now be described with reference to FIGS. 16 and 17.

In the case where a triple play service is provided in a digital cable broadcast, it is possible to utilize resources of a PC which receives an Internet service in cooperation with an ISP service by operating the PC in association with the flexible browser of the receiving terminal 300. The function of this system may be performed through communication between a PC, in which a module of the ubiquitous server 100 (for example, a distribution module minimized only through a resource share function so as to be suitable for use in the PC) is installed, and the flexible browser of the receiving terminal 300.

The triple play service of digital cable broadcasting may be implemented by allocating a private IP to a terminal for ISP services (for example, a network receiver such as an access point) and each receiving terminal 300 (STB) for digital broadcasting through a network system of a cable broadcast company.

This can be achieved by grouping the receiving terminals 300 and ISP service terminals into a group of the same network and providing a service to the group. Each system determines whether or not each PC and each receiving terminal 300 present in the same network can share and use resources through a secure network by authenticating the PC and the receiving terminal 300 through a ubiquitous server module of the PC which uses an ISP terminal and a flexible browser of the receiving terminal 300.

The flexible browser of the receiving terminal 300 which has undergone authentication can use various multimedia resources by accessing shared resources of the PC. Specific resources of the PC may be allocated as a Social Network Service (SNS) region such that a personal broadcast service can be provided through the ubiquitous server module of the PC.

FIG. 16 illustrates an exemplary screen where a personal mini-homepage service is being used through a receiving terminal and FIG. 17 illustrates an exemplary screen where a photograph image of a PC is broadcast through a personal image broadcast service using a ubiquitous server module of the PC.

Next, a method for securing a network bandwidth in a cooperative service using a ubiquitous system is described below.

The term "cooperative service" generally refers to a type of service that is provided by transmitting a data service within a bandwidth in which A/V is transmitted to allow the viewer to simultaneously receive a data broadcast service while viewing A/V. When a ubiquitous-based interactive service is provided in a cooperative manner, it should be possible to provide a data broadcast while A/V is being displayed. This may limit viewer access since it is necessary to individually allocate a network bandwidth to each viewer. The following alternative may be suggested as a method for solving this problem.

In a general digital cable broadcast, a physical channel has a specific bandwidth size according to a designated transmission scheme. Generally, the bandwidth is divided so as to provide multiple-channel services through virtual channels.

Here, 2 virtual channel bandwidths are allocated in addition to an A/V channel in order to provide a cooperative service using the ubiquitous system. One of the two bandwidths is allocated as a bandwidth for common module transmission and the other is allocated as a bandwidth for independent data module transmission.

By transmitting common modules (for example, background images, common icons, common templates, and common data) that can be commonly used for a cooperative service through the bandwidth for common module transmission, it is possible to normally execute and enter the service.

Individually generated data having a relatively small size is transmitted through the bandwidth for independent data module transmission.

Service execution response speed can be improved by separating common modules and independent data modules generated respectively for individuals and private information leakage can be completely prevented by setting the independent data module channel as an encryption-dedicated channel.

It is rare that an entire allocated bandwidth is used when a digital broadcast is transmitted. Some bandwidth may be unused depending on A/V compression ratio and system information or additional information for data broadcasting may be transmitted together within the corresponding data transmission region.

A second method of securing a network bandwidth of each receiving terminal 300 when providing a cooperative service using a ubiquitous system is described as another exemplary method for securing a network bandwidth in a cooperative service using a ubiquitous system. As a method using a Mosaic system, this method additionally requires a configuration of a Mosaic system which compresses and retransmits A/V of multiple channels.

Let us assume that 6 A/V virtual channels are being transmitted within one physical channel bandwidth. Here, the following method may be used when providing an interactive service in a program of channel A.

A trigger indicating that an interactive service is executable is displayed while the viewer is viewing a program of channel A. When the viewer selects the trigger, the receiving terminal 300 tunes to a physical channel for an interactive service. The channel includes both a channel which carries A/V obtained by re-encoding A/V of channels A, B, C, D, E, and F into a mosaic screen and an interactive service channel. A/V transmitted through a mosaic bandwidth of 636 Mhz includes one encoded video item, which is a video item encoded as 1 video with 6 videos of channels A, B, C, D, E, and F, and 6 audio items. Respective PIDs are allocated to the 7 streams such that the receiving terminal 300 can select and output an A/V item.

Since it is possible to extend the interactive service channel bandwidth within a range of 637 to 641 Mhz, this method allows a cooperative service to be provided to a greater number of receiving terminals 300 using the bandwidth.

The mosaic system multiplexes A/V data of multiple channels such that a video stream of one ID and audio streams of multiple PIDs are retransmitted. These streams are retransmitted through a single virtual channel bandwidth. Using these characteristics, it is possible to secure a bandwidth for cooperative services.

The embodiments according to the present invention may be implemented in the form of program instructions that may be executed through various computer components to be recorded on a computer readable medium. The computer readable medium may include program instructions, data files, data structures, and the like individually or in combination. The program instructions recorded on the medium may be specifically designed for the present invention or may be well known to one of ordinary skill in the art of software. Examples of the computer readable medium include a magnetic medium such as a hard disk, a floppy disk, or a magnetic tape, an optical medium such as CD-ROM or DVD, a magneto-optical medium such as a floptical disk, and a hardware device such as ROM, RAM, or a flash memory that is specially designed to store and execute program instructions. Examples of the program instructions include not only machine code generated by a compiler or the like but also high-level language codes that may be executed by a computer using an interpreter or the like. The hardware device described above may be constructed so as to operate as one or more software modules for performing the processes of the embodiments of the present invention, and vice versa.

Although the present invention has been described with reference to specific details such as the specific components, the limited embodiments, and the drawings, the above description has been given only to provide a thorough understanding of the present invention and the present invention is not limited to the embodiments, and those skilled in the art will be able to make various modifications and changes from the description.

Accordingly, the scope of the present invention should not be determined by the above description and not only the appended claims but also all changes equivalent or equal to the claims should be construed as being included in the scope of the invention.

## Claims

1. A system for providing an interactive service in a digital cable broadcast environment, the system comprising:
a ubiquitous server that generates a content for providing an interactive service in a digital cable broadcast system;
a ubiquitous network manager that monitors usage of a cable network and manages transmission of the content generated by the ubiquitous server; and
a QAM system that transmits the content generated by the ubiquitous server through a digital cable broadcast signal such that the content can be received by a receiving terminal in which a flexible browser is running.

2. The system according to claim 1, further comprising:
a broadcast Head/End (H/E) system connected to the QAM system, the broadcast H/E system providing A/V and broadcast information; and
a PSIP/SI system that generates and transfers broadcast program scheduling information and broadcast System Information (SI).

3. The system according to claim 1, wherein the ubiquitous network manager monitors the QAM system for efficient content transmission according to use of a digital cable broadcast network such that resources of an idle QAM device can be used in the ubiquitous server.

4. The system according to claim 1, wherein the ubiquitous server includes:
a browser module that browses, when there is a need to automatically generate interactive service or one-way content according to a specific schedule or according to a request from the flexible browser of the receiving terminal, a service provided to the receiving terminal and generates raw data for transmitting the content to the receiving terminal;
a session manager that performs a session process for resource management of the ubiquitous server when a request is received from the receiving terminal or when content is transmitted to the receiving terminal;
an image encoder that converts, when content is executed by the browser module, a transmission part of the content into an image according to a protocol;
a compressor that compresses service content, which has been converted into an image by the image encoder, in order to reduce network usage and transmission time; and
a transmitter that transmits data output from the compressor through a digital broadcast.

5. The system according to claim 4, wherein the image encoder converts a component including at least one of a moving image, flash, application content, and an active x belonging to the content that are running in the browser module into an image;

6. The system according to claim 4, wherein the protocol includes a protocol associated with the data that is displayed and used in the receiving terminal, a protocol associated with execution of the service, and link information associated with connection for providing the service.

7. The system according to claim 1, wherein the ubiquitous network manager includes:
a server session monitor that detects that a session has occurred in the ubiquitous server when interactive communication is performed between the receiving terminal and the ubiquitous server according to an interactive service request from the flexible browser and then processes corresponding information;
a QAM port monitor that manages a bandwidth and a port of the QAM system; and
a database that manages data transmitted between the ubiquitous server and the QAM system.

8. The system according to claim 7, wherein the server session monitor performs distribution of resources of each ubiquitous server connected in parallel and updates information to allow, when the server is out of order, a session of the flexible browser to be processed by another server.

9. A method for providing an interactive service in a digital cable broadcast environment, the method comprising:
a) a ubiquitous server generating content for providing an interactive service in a digital cable broadcast system;
b) a ubiquitous network manager monitoring usage of a cable network and managing transmission of content generated by the ubiquitous server; and
c) a QAM system transmitting content generated by the ubiquitous server through a digital cable broadcast signal such that the content can be received by a receiving terminal in which a flexible browser is running.

10. The method according to claim 9, wherein the step b) includes monitoring the QAM system for efficient content transmission according to use of a digital cable broadcast network such that resources of an idle QAM device can be used in the ubiquitous server.

11. The method according to claim 9, wherein the step a) includes:
browsing, when there is a need to automatically generate interactive service or one-way content according to a specific schedule or according to a request from the flexible browser of the receiving terminal, a service provided to the receiving terminal and generating raw data for transmitting the content to the receiving terminal;
performing a session process for resource management of the ubiquitous server when a request is received from the receiving terminal or when content is transmitted to the receiving terminal;
converting, when content is executed by the browser module, a transmission part of the content into an image according to a protocol;
compressing service content, which has been converted into the image, in order to reduce network usage and transmission time; and
transmitting compressed output data through a digital broadcast.

12. The method according to claim 11, wherein the step of converting the transmission part into the image includes converting a component including at least one of a moving image, flash, application content, and an active x belonging to the content that are running in the browser module into an image.

13. The method according to claim 11, wherein the protocol includes a protocol associated with the data that is displayed and used in the receiving terminal, a protocol associated with execution of the service, and link information associated with connection for providing the service.

14. The method according to claim 9, wherein the step b) includes:
detecting that a session has occurred in the ubiquitous server when interactive communication is performed between the receiving terminal and the ubiquitous server according to an interactive service request from the flexible browser and then processing corresponding information;
managing a bandwidth and a port of the QAM system; and managing data transmitted between the ubiquitous server and the QAM system.

15. The method according to claim 14, wherein the step of detecting that a session has occurred and processing the corresponding information includes performing distribution of resources of each ubiquitous server connected in parallel and updating information to allow, when the server is out of order, a session of the flexible browser to be processed by another server.

16. A computer readable recording medium containing a computer program for executing the method according to any one of claims 9 to 15.
